# EUROPEAN PATENT APPLICATION

(11) **EP 4 458 507 A1**
(43) Date of publication of application: **06.11.2024**
(21) Application number: 23878914.3
(22) Date of filing: 22.09.2023
(51) Int. Cl.: B23K 35/40, B23K 9/18

(54) **STEEL FOR SUBMERGED-ARC WELDING WIRE, WIRE ROD, SUBMERGED-ARC WELDING WIRE AND PREPARATION METHOD THEREFOR**

(30) Priority: 19.10.2022 CN 202211276565
(71) Applicant: Zhangjiagang Rongsheng Special Steel Co. Ltd., Suzhou, Jiangsu 215625 (CN); Institute of Research of Iron and Steel, Jiangsu Province/Sha-Steel, Co. Ltd (CN), Suzhou, Jiangsu 215625 (CN); Jiangsu Shagang Group Co., Ltd., Suzhou, Jiangsu 215625 (CN)
(72) Inventor: WANG, Na, Suzhou, Jiangsu 215625 (CN); ZHANG, Yu, Suzhou, Jiangsu 215625 (CN); MA, Han, Suzhou, Jiangsu 215625 (CN)
(74) Representative: Potter Clarkson
(86) International application number: PCT/CN2023/120789
(87) International publication number: WO 2024/082921

(57) **Abstract**

A method for preparing a steel for a high-Ti pipeline submerged-arc welding wire, comprising converter smelting, LF refining, continuous casting, rolling and cooling; in LF refining, refined slag components by weight percentage are: 40 to 50% of (CaO+CaF₂), 30 to 40% of Al₂O₃, ≤5% of SiO₂, and 10 to 20% of MnO, and during the LF refining process, a pure calcium wire is fed before tapping. A steel for a submerged-arc welding wire and a preparation method therefor, a wire rod for a submerged-arc welding wire, a submerged-arc welding wire and a preparation method therefor. The steel for the submerged-arc welding wire and the preparation method for the submerged-arc welding wire overcome the defects of submerged-arc welding wire being high in cost and prone to nodulation; when the steel for the submerged-arc welding wire is prepared, it may continuously cast in more than 10 furnaces.

## Description

### CROSS-REFERENCE TO RELATED APPLICATIONS

The present application claims priority of the Chinese Patent Application No. 202211276565.3, filed on October 19, 2022 before the China National Intellectual Property Administration, with the title of "STEEL FOR SUBMERGED-ARC WELDING WIRE, WIRE ROD, SUBMERGED-ARC WELDING WIRE AND PREPARATION METHOD THEREFOR", which is hereby incorporated by reference in its entirety.

### TECHNICAL FIELD OF THE INVENTION

The present application belongs to the technical field of steel smelting, and specifically relates to a type of steel for a submerged-arc welding wire, a wire rod for a submerged-arc welding wire, a submerged-arc welding wire and a preparation method therefor.

### BACKGROUND OF THE INVENTION

Compared with gas shielded arc welding, submerged-arc welding has high production efficiency and high degree of automation. Titanium-containing welding wire steel is widely used in pipeline steel welding. Adding Ti element into alloy welding wire can refine the grains, while improving the low-temperature impact toughness and tensile strength of the deposited metal. However, titanium-containing pipeline submerged-arc welding wire steel encounters smelting problems in production: (1) water nozzle nodulation occurs during casting, which is manifested as the rise of stopper during casting; and (2) the yield of Ti in the refining process is low, less than 40%. Considering the difficulty of continuous casting of steelmaking, many steel companies control the mass percentage of Ti content in welding wire to less than 0.07%, and then add expensive Mo to meet the mechanical properties requirements of the deposited metal. Some steel companies choose to produce using large square billets. No matter which method is chosen, the cost is greatly increased.

Patent document CN201110242037.1 discloses a wire rod for producing pipeline submerged-arc welding wire, the chemical composition of the wire rod is as follows by weight percentage: C 0.04%-0.11%, Si 0.10%-0.40%, Mn 1.40%-1.90%, Ni 0.40%-0.60%, Mo 0.20%-0.40%, Ti 0.03%-0.10%, B 0.004%-0.007%, Al 0.010%-0.030%, S≤0.003%, P≤0.008%, O≤0.0015%, N≤0.0040%, the balance of Fe and unavoidable impurities. Considering the difficulty of steelmaking, its Ti content is only 0.03%-0.10%, and in addition, the cost is greatly increased by adding alloy elements such as Mo, Ni, and B to meet the mechanical properties of the weld.

Patent document CN112011718A provides a low-aluminum high-titanium welding wire steel and a smelting method therefor, comprising the following steps: step S1, converter tapping, deoxidizing and alloying: adding high-silicon siliconmanganese and high-purity ferrosilicon in sequence during converter tapping to carry out deoxidizing and alloying, and then adding lime and fluorite in sequence; and step S2, LF (Ladle Furnace) refining: adding lime and fluorite to an LF furnace according to the fluidity of refined slag; when energizing the refining for the first time, adding calcium carbide and ferrosilicon powder in multiple batches to deoxidize slag surfaces; carrying out sampling and testing after energizing for a period of time, and according to the test results, adding high-purity ferrosilicon and metal manganese to adjust the compositions to target values; from the addition of alloy to the end of the refining, adding ferrosilicon powder to maintain the reducibility of the refined slag; and in the later refining stage, feeding ferrotitanium wires at one time so that the titanium content reaches a target value, supplementing sulfur wires according to a sulfur content in the test results, and then performing continuous casting on a machine after soft blowing. This patent stably controls the compositions of the low-aluminum and high-titanium welding wire steel, also greatly improves the continuous casting performance of the low-aluminum and high-titanium welding wire steel, and reduces production cost. Although this patent can achieve stable control of the compositions of low-aluminum and high-titanium welding wire steel, it is only applicable to welding wire steel that does not contain Al. For welding wire steel containing Al, it will cause secondary oxidation of Al₂O₃ during casting.

### SUMMARY OF THE INVENTION

Therefore, the technical problem to be solved by the present application is to overcome the defects of submerged-arc welding wire being high in cost and prone to nodulation in the prior art, thereby providing a type of steel for submerged-arc welding wire, a wire rod for submerged-arc welding wire, a submerged-arc welding wire and a preparation method therefor.

To this end, the present application provides the following technical solutions.

In a first aspect, the present application provides a method for preparing a type of steel for a high-Ti pipeline submerged-arc welding wire, comprising converter smelting, LF refining, continuous casting, rolling and cooling.

In the LF refining, the composition of refined slag comprises: 40 wt% to 50 wt% of (CaO+CaF₂), 30 wt% to 40 wt% of Al₂O₃, 0 to 5wt% of SiO₂, and 10 wt% to 20 wt% of MnO.

In the LF refining process, feeding of pure calcium wire before tapping is performed.

Optionally, the feeding of pure calcium wire before tapping comprises: 15 min to 18 min before tapping, feeding pure calcium wire with a diameter of 5 mm to 10 mm at a rate of 250 m/ton to 400 m/ton.

Optionally, during the continuous casting process, a layer of refractory material is placed around the upper edge of a tundish before casting, and then the tundish cover is closed, and argon gas is blown into the tundish to replace the air in the tundish.

The degree of superheat of the tundish is 30°C-50°C, the casting rate is 2.5±0.1m/s, the temperature difference between the inlet and outlet water of the crystallizer is less than or equal to 10°C, the temperature of the secondary cooling and the temperature of the inlet water of the crystallizer is higher than or equal to 30°C, and the stopper is opened to start casting when the depth of the molten steel in the tundish is higher than the height of the hole on the slag retaining wall.

Optionally, argon gas is blown into the tundish through an argon blowing tube, the height of the argon blowing tube is kept consistent with the depth within the tundish, and the argon blowing time is in a range from 5 min to 6 min.

Optionally, during the rolling process, finish rolling inlet temperature is higher than or equal to 870°C and less than or equal to 900°C, and rolling rate is higher than or equal to 90m/s and less than or equal to 100m/s.

During the cooling process, temperature-controlled cooling is performed on the Stelmor cooling line, wherein spinning temperature is in a range from 880° C to 900° C, and cooling rate is less than or equal to 6 m/s.

In a second aspect, a type of steel for a high-Ti pipeline submerged-arc welding wire prepared by the above method is provided.

Optionally, the chemical composition of the above-mentioned steel for a high-Ti pipeline submerged-arc welding wire comprises: 0.07 wt% to 0.10 wt% of C, 0.15 wt% to 0.25 wt% of Si, 1.50 wt % to 1.80 wt % of Mn, 0.25 wt % to 0.35 wt % of Ti, 0.02 wt % to 0.03 wt % of Al, 0.0020 wt % to 0.0040 wt % of Ca,0 to 0.004% of O, and the balance of Fe and unavoidable impurities.

In a third aspect, a wire rod for a high-Ti pipeline submerged-arc welding wire is provided, wherein the wire rod has a tensile strength of less than or equal to 600 MPa and a percentage reduction of area after fracture of higher than or equal to 75%.

In a fourth aspect, a high-Ti pipeline submerged-arc welding wire is provided, which is made from the above-mentioned wire rod for a high-Ti pipeline submerged-arc welding wire.

In a fifth aspect, a method for preparing a high-Ti pipeline submerged-arc welding wire is provided, in which the wire rod is directly wire drawn without annealing, and the wire drawing rate is less than or equal to 15m/s.

The continuous casting in the present application is the continuous casting of small square billets with a cross-sectional area of 140 mm×140 mm.

The technical solution of the present application has the following advantages:
1. According to the method for preparing a type of steel for a high-Ti pipeline submerged-arc welding wire provided by the present application, in the LF refining, feeding of pure calcium wire before tapping is performed, the feeding of pure calcium wire can absorb oxygen in molten steel, generate oxide of calcium with oxygen in steel, reduce the oxide content in steel, make the oxygen float to the slag surface with stirring, reduce the amounts of generated titanium and aluminum oxides after oxygen is reduced, and make the size of composite inclusions become smaller. In addition, during the refining process, by adjusting the refined slag, the oxygen content of the steel grade can be effectively controlled below 0.004%, thereby fundamentally solving the problem of water nozzle nodulation in the continuous casting process. Feeding of calcium wire can not only solve the problem of nodulation and stop casting caused by secondary oxidation of TiO₂ during the casting process, but also improve the yield of Ti. It can also solve the nodulation problem of molten steel with high Al content.
   There is no need to add expensive Mo to replace part of Ti, the alloy cost is low, and small square billets can be used for continuous casting of steelmaking for more than 10 furnaces without the occurrence of water nozzle nodulation and other phenomena.
2. The chemical composition of the steel for a high-Ti pipeline submerged-arc welding wire prepared in the present application comprises 0.07 wt%-0.10 wt% of C, 0.15 wt %-0.25 wt % of Si, 1.50 wt %-1.80 wt % of Mn, 0.25 wt %-0.35 wt % of Ti, 0.02 wt % to 0.03 wt % of Al, 0.0020 wt %-0.0040 wt % of Ca,0-0.004 wt % of O, and the balance of Fe and unavoidable impurities.

The present application has a relatively high Ti content of 0.25%-0.35%, which can improve the toughness of the weld metal, and does not require the addition of other alloying elements to improve the mechanical properties of the weld, thus reducing the cost of steel. The design of high Si content allows the use of Si to conduct deoxidation during the steelmaking process, further reducing Ti oxide inclusions in the molten steel, which helps solve the problem of water nozzle nodulation during the continuous casting process.

The addition of Ca element in the present application can reduce the oxide content in the steel, reduce the amount of titanium and aluminum oxides generated, and reduce the size of composite inclusions (Ti and Al oxide inclusions tend to aggregate during the casting process and then block the water nozzle), fundamentally solving the problem of water nozzle nodulation during the continuous casting process, while improving the Ti yield.

By adding calcium element into carbon steel, dispersed thermally-stable second-phase calcium-containing oxide particles can be formed in the steel. This can pin the austenite grain boundary migration in the coarse-grained heat-affected zone (CGHAZ) during the welding thermal cycle, limit the growth of austenite grains, obtain a finer weld CGHAZ grain size, and thus improve the strength and toughness of the micro-calcium steel welded CGHAZ.

3. The wire rod of the present application has a tensile strength of less than or equal to 600MPa and a percentage reduction of area after fracture of higher than or equal to 75%. Annealing is not required when preparing the submerged-arc welding wire, which reduces the production cost. The submerged-arc welding wire of the present application is used for the deposited metal test, and the tensile strength of the weld is higher than or equal to 560MPa, and the low-temperature impact toughness at -40°C is higher than or equal to 150J.

### DETAILED DESCRIPTION OF THE INVENTION

The following examples are provided for a better understanding of the present application, but are not limited to the best implementation mode described, and do not limit the content and protection scope of the present application. Any product identical or similar to the present application obtained by anyone under the inspiration of the present application or by combining the features of the present application with other prior arts shall fall within the protection scope of the present application.

If no specific experimental steps or conditions are specified in the examples, the operations or conditions of conventional experimental steps described in the literature in the present field can be used. If no manufacturer is specified for the reagents or instruments used, they are all conventional reagent products that can be purchased commercially.

The preparation method of the submerged-arc welding wire of Examples 1 to 4 comprises the following steps:
(1) Converter smelting; and
(2) LF refining: 18 minutes before steel tapping during refining, a pure calcium wire with a diameter of 8 mm was fed and stirred with argon blowing, and the time for argon blowing and stirring was not less than 10 minutes.

**Table 1. LF refining parameters**

| | Length of the pure calcium wire fed | Time for argon blowing and stirring |
|---|---|---|
| Example 1 | 250 m/ton | 10 min |
| Example 2 | 300 m/ton | 12 min |
| Example 3 | 350 m/ton | 15 min |
| Example 4 | 400 m/ton | 13 min |

**Table 2. Refined slag components (wt%)**

| | CaO+CaF₂ | Al₂O₃ | SiO₂ | MnO |
|---|---|---|---|---|
| Example 1 | 50 | 30 | 2 | 18 |
| Example 2 | 40 | 37 | 3 | 20 |
| Example 3 | 45 | 35 | 4 | 16 |
| Example 4 | 48 | 37 | 5 | 10 |

(3) Continuous casting of small square billets:

A thick layer of refractory cotton was placed around the upper edge of the tundish before casting, and then the tundish cover was closed, and argon gas was blown into the tundish with three argon blowing tubes to replace the air in the tundish. The height of the argon blowing tube was kept consistent with the depth within the tundish, and the argon blowing time was in a range from 5 min to 6 min.

The degree of superheat was 40°C, the casting rate was 2.5m/s, the temperature difference between the inlet and outlet water was 10°C, the temperature of the secondary cooling and the temperature of the inlet water of crystallizer was 35°C, and the stopper was opened to start casting when the depth of the molten steel in the tundish is higher than the height of the hole on the slag retaining wall.

### (4) Rolling

The small square billet was heated in a heating furnace and then continuously rolled. The finish rolling inlet temperatures of Examples 1 to 4 were 870°C, 900°C, 880°C, and 900°C, respectively, and the rolling rates are 90m/s, 100m/s, 92m/s, and 98m/s, respectively.

### (5) Cooling

The spinning wire was fed into the Stelmore cooling line for temperature-controlled cooling, where the spinning temperatures were 880°C, 900°C, 900°C, and 890°C, respectively. The fans and insulation covers were all closed, the orbital velocity of the Stelmore cooling line was 0.15m/s, and the cooling rates in the insulation cover were 6m/s, 6m/s, 5m/s, and 5m/s, respectively.

### (6) Wire drawing and copper plating

The wire rod obtained in step (5) was directly wire drawn without annealing at a wire drawing rate of 15 m/s, and then copper-plated and coiled.

### Comparative Example 1

Comparative Example 1 was substantially the same as that of Example 1, except that no calcium wire was added in Comparative Example 1.

### Comparative Example 2

Comparative Example 2 is substantially the same as that of Example 1, except that the refined slag was a low-basicity slag system, which has the following composition: 30 wt% of "CaO+CaF₂", 10 wt% of Al₂O₃, 42 wt % of SiO₂, and 18 wt % of MnO, which did not conform to the slag system composition described in the present application.

### Test example

(1) The maximum number of continuous casting furnaces for steelmaking was recorded, and the composition of the wire rod was tested using ICP and CS instruments. The chemical composition is expressed in weight percentage, see Table 3.

**Table 3. Wire rod composition**

| | C | Si | Mn | Ti | Ca | O | Al | Number of continuous casting furnaces (furnace) |
|---|---|---|---|---|---|---|---|---|
| Example 1 | 0.10 | 0.15 | 1.75 | 0.25 | 0.0020 | 0.004 | 0.02 | 17 |
| Example 2 | 0.07 | 0.25 | 1.50 | 0.29 | 0.0025 | 0.003 | 0.02 | 17 |
| Example 3 | 0.08 | 0.25 | 1.55 | 0.32 | 0.0029 | 0.003 | 0.03 | 16 |
| Example 4 | 0.09 | 0.20 | 1.80 | 0.35 | 0.0040 | 0.004 | 0.02 | 18 |
| Comparative Example 1 | 0.10 | 0.16 | 1.76 | 0.25 | 0.0003 | 0.004 | 0.03 | 3 |
| Comparative Example 2 | 0.09 | 0.17 | 1.75 | 0.24 | 0.0022 | 0.008 | 0.03 | 5 |

(2) Test of the tensile strength and percentage reduction of area after fracture of wire rod
The wire rod was cut to 30 cm, and the tensile strength and percentage reduction of area after fracture of the wire rod were tested on a 250 kN tensile testing machine (Instron 5585). The test results were shown in Table 4.

**Table 4. Tensile strength and percentage reduction of area after fracture**

| | Tensile strength (MPa) | Percentage reduction of area after fracture (%) |
|---|---|---|
| Example 1 | 544 | 81 |
| Example 2 | 521 | 78 |
| Example 3 | 553 | 76 |
| Example 4 | 600 | 75 |

(3) The mechanical properties test of weld

The deposited metal test was carried out according to the standard GBT 8110-2008, and then the mechanical properties test was carried out. The test results are shown in Table 5.

**Table 5. Weld deposit**

| | Tensile strength (MPa) | Impact toughness at -40°C (J) |
|---|---|---|
| Example 1 | 630 | 178/195/184 |
| Example 2 | 570 | 192/186/164 |
| Example 3 | 610 | 174/185/192 |
| Example 4 | 620 | 152/164/171 |
| Comparative Example 1 | 600 | 92/84/111 |

The weld formed by the submerged-arc welding wire of the present application has a tensile strength higher than or equal to 560MPa and a low-temperature impact toughness at -40°C higher than or equal to 150J.

As can be seen from the above, compared with Example 1, the wire rod of Comparative Example 1 has insufficient Ca content in its composition, and the strength and toughness of the weld are reduced. In addition, Comparative Example 1 does not add calcium wire, resulting in nodules, and the number of continuous casting furnaces is only 3. During the steelmaking process of the wire rod of Comparative Example 2, the refined slag system components do not meet the technical requirements, so the O content is too high, and the number of continuous casting furnaces is only 5.

Obviously, the above examples are merely examples for the purpose of clear explanation, and are not intended to limit the embodiments. For those skilled ordinary in the art, other different forms of changes or modifications can be made based on the above description. It is not necessary and impossible to list all the embodiments here. The obvious changes or modifications derived therefrom are still within the scope of protection of the present application.

## Claims

1. A method for preparing a type of steel for a high-Ti pipeline submerged-arc welding wire, comprising converter smelting, LF refining, continuous casting, rolling and cooling;
in the LF refining, the composition of refined slag comprises: 40 wt% to 50 wt% of (CaO+CaF₂), 30 wt% to 40 wt% of Al₂O₃, 0 to 5wt% of SiO₂, and 10 wt% to 20 wt% of MnO;
in the LF refining process, feeding of pure calcium wire before tapping is performed;
the chemical composition of the prepared steel for a high-Ti pipeline submerged-arc welding wire comprises: 0.07 wt% to 0.10 wt% of C, 0.15 wt% to 0.25 wt% of Si, 1.50 wt % to 1.80 wt % of Mn, 0.25 wt % to 0.35 wt % of Ti, 0.02 wt % to 0.03 wt % of Al, 0.0020 wt % to 0.0040 wt % of Ca, 0 to 0.004 wt% of O, and the balance of Fe and unavoidable impurities.

2. The method for preparing a type of steel for a high-Ti pipeline submerged-arc welding wire according to claim 1, wherein the feeding of pure calcium wire before tapping comprises: 15 min to 18 min before tapping, feeding pure calcium wire with a diameter of 5 mm to 10 mm at a rate of 250 m/ton to 400 m/ton.

3. The method for preparing a type of steel for a high-Ti pipeline submerged-arc welding wire according to claim 1, wherein during the continuous casting process, a layer of refractory material is placed around the upper edge of a tundish before casting, and then the tundish cover is closed, and argon gas is blown into the tundish to replace the air in the tundish; and
the degree of superheat of the tundish is 30°C-50°C, the casting rate is 2.5±0.1m/s, the temperature difference between the inlet and outlet water of the crystallizer is less than or equal to 10°C, the temperature of the secondary cooling and the temperature of the inlet water of the crystallizer is higher than or equal to 30°C, and the stopper is opened to start casting when the depth of the molten steel in the tundish is higher than the height of the hole on the slag retaining wall.

4. The method for preparing a type of steel for a high-Ti pipeline submerged-arc welding wire according to claim 3, wherein argon gas is blown into the tundish through an argon blowing tube, the height of the argon blowing tube is kept consistent with the depth within the tundish, and the argon blowing time is in a range from 5 min to 6 min.

5. The method for preparing a type of steel for a high-Ti pipeline submerged-arc welding wire according to claim 1, wherein during the rolling process, finish rolling inlet temperature is higher than or equal to 870°C and less than or equal to 900°C, and rolling rate is higher than or equal to 90m/s and less than or equal to 100m/s; and
during the cooling process, temperature-controlled cooling is performed on the Stelmor cooling line, wherein, spinning temperature is in a range from 880° C to 900° C, and cooling rate is less than or equal to 6 m/s.

6. A type of steel for a high-Ti pipeline submerged-arc welding wire, wherein the steel for a high-Ti pipeline submerged-arc welding wire is prepared by the method according to any one of claims 1 to 5.

7. A wire rod for a high-Ti pipeline submerged-arc welding wire, comprising steel produced by the method according to any one of claims 1 to 5, wherein the wire rod has a tensile strength of less than or equal to 600 MPa and a percentage reduction of area after fracture of higher than or equal to 75%.

8. A high-Ti pipeline submerged-arc welding wire, wherein the high-Ti pipeline submerged-arc welding wire is made from the wire rod for a high-Ti pipeline submerged-arc welding wire according to claim 7.

9. A method for preparing the high-Ti pipeline submerged-arc welding wire according to claim 8, wherein the wire rod is directly wire drawn without annealing, and the wire drawing rate is less than or equal to 15m/s.
